# EUROPEAN PATENT APPLICATION

(11) **EP 4 654 312 A1**
(43) Date of publication of application: **26.11.2025**
(21) Application number: 25171274.1
(22) Date of filing: 17.04.2025
(51) Int. Cl.: H01M 10/0525, H01M 10/0567

(54) **ELECTROLYTE AND LITHIUM-ION BATTERIES**

(30) Priority: 24.05.2024 CN 202410657957
(71) Applicant: AESC Japan Ltd., Yokohama-Shi, Kanagawa 220-0012 (JP)
(72) Inventor: YU, Le, Pudong New Area Shanghai, 201315 (CN); ZHANG, Xiaozhe, Pudong New Area Shanghai, 201315 (CN)
(74) Representative: Becker, Eberhard

(57) **Abstract**

Disclosed is an electrolyte, which includes: a solvent, the solvent being a fluorinated solvent; a lithium salt; and additives, the additives including 1-propene 1,3-sultone (PST), and diethyl (thiophen-2-ylmethyl)phosphonate (DTYP). The electrolyte provided may withstand high voltage, and the electrolyte may form a stable protective film at the interface between the electrode and the electrolyte in the battery, ensuring the stability of the interface between electrode and electrolyte at high temperature, thereby significantly improving the high-temperature stability of high-voltage batteries. According to other embodiment of the present disclosure, a lithium-ion battery is also disclosed.

## Description

### BACKGROUND

### Technical Field

The present disclosure relates to the battery, more specifically, to electrolytes and lithium-ion batteries.

### Description of Related Art

In recent years, the rapid development of the new energy vehicle market has led to an explosive growth in the market value of power batteries, primarily dominated by secondary alkali metal ion batteries. However, the energy density of commercially available secondary alkali metal ion batteries has approached its theoretical limit. To fundamentally address the range anxiety of electric vehicle buyers and enhance the energy density of current batteries, increasing battery voltage is an intuitive and feasible method. Consequently, as battery voltage increases, higher demands are placed on the high-voltage resistance performance of electrolyte, as well as its high-temperature stability and other properties under high-voltage conditions.

### SUMMARY

In view of the problems existing in the related art, the purpose of the present disclosure lies in providing an electrolyte that may withstand high voltage, and the electrolyte may form a stable protective film at the interface between the electrode and electrolyte in the battery, ensuring the stability of the interface between electrode and electrolyte at high temperature, thereby significantly improving the high-temperature stability of high-voltage batteries.

To achieve the above-mentioned purpose, the present disclosure provides an electrolyte on one aspect, the electrolyte includes: a solvent, wherein the solvent is a fluorinated solvent; a lithium salt; and additives, wherein the additives include 1-propene 1,3-sultone (PST), and diethyl (thiophen-2-ylmethyl)phosphonate (DTYP).

In some embodiments, the mass of DTYP may be 0.01% to 1% of the total mass of the electrolyte, and the mass of PST may be 0.01% to 1% of the total mass of the electrolyte.

In some embodiments, the fluorinated solvent is a fluorinated carbonate ester solvent.

In some embodiments, the fluorinated carbonate ester solvent includes fluorinated ethyl methyl carbonate (FEMC) and fluorinated ethylene carbonate (FEC), where the mass ratio of FEMC to FEC is 7:3 to 10:0.

In some embodiments, the content of the lithium salt is 12% to 20% of the total mass of the electrolyte.

In some embodiments, the lithium salt is one or more selected from lithium hexafluorophosphate, lithium bis(fluorosulfonyl)imide, lithium bis(trifluoromethanesulfonyl)imide, lithium tetrafluoroborate, lithium methanesulfonate, lithium trifluoromethanesulfonate, lithium hexafluoroarsenate, lithium hexafluoroantimonate, lithium perchlorate, lithium difluoro(oxalato)borate, lithium bis(oxalato)borate, and lithium difluorophosphate.

The purpose of the present disclosure further lies in providing a lithium-ion battery, which includes an electrolyte capable of withstanding high voltage, and the electrolyte forms a stable protective film at the interface between the electrode and the electrolyte in the battery, ensuring the stability of the interface between electrode and electrolyte at high temperature, thereby significantly improving the high-temperature stability of high-voltage batteries. Another aspect of the present disclosure provides a lithium-ion battery, including: a positive electrode, a negative electrode, a separator located between the positive electrode and the negative electrode, and the electrolyte described in any of the above embodiments. In some embodiments, the positive electrode includes a positive electrode current collector and a positive electrode material layer located on the positive electrode current collector. The positive electrode material layer includes lithium nickel manganese oxide, with the chemical formula of LiaNiₓMn_{y}O_{4-z}M_{z}, where 0.90≤a≤1.10, 0.4≤x≤0.6, 1.4≤y≤1.6, 0≤z≤0.1, and element M is one or more of Cl, Br, I, S, Se, Te or F. In some embodiments, the negative electrode includes a negative electrode current collector and a negative electrode material layer located on the negative electrode current collector, with the negative electrode material layer including graphite material.

The advantageous technical effects of the present disclosure lie in:
The solvent of the electrolyte is a fluorinated solvent. When the fluorinated solvent is combined with the PST as the additive and DTYP as the additive, a stable protective film may be formed at the interface between electrode and electrolyte, ensuring the stability of the interface between electrode and electrolyte at high temperature, thereby significantly improving the high-temperature stability of the high-voltage battery.

Due to the simultaneous addition of the PST as the additive and DTYP as the additive in the fluorinated solvent system, the electrolyte may form a stable protective film at the interface between electrode and electrolyte of the lithium-ion battery, ensuring the stability of the interface between electrode and electrolyte at high temperature, thereby significantly improving the high-temperature stability of the high-voltage battery.

### DESCRIPTION OF THE EMBODIMENTS

The following exemplary embodiment are described in detail and comprehensively. However, these exemplary embodiment may be implemented in different ways and should not be interpreted as limited to the embodiment described in the present disclosure. On the contrary, the purpose of providing these embodiment is to make the present disclosure thorough and complete, and to fully convey the scope of the present disclosure to those skilled in the art. For specific technologies or conditions not specified in the embodiment, they may be carried out according to the technologies or conditions described in the literature in this field or according to product specifications. Reagents or instruments used without specifying manufacturers are all conventional products that can be purchased through regular channels.

At present, an electrolyte design approach has been proposed to partially or completely replace the conventional carbonate ester-based electrolyte solvent with fluorinated solvents, such as fluorinated ethyl methyl carbonate (FEMC). Due to the high electron-withdrawing ability of fluorine atoms, fluorine atoms may better improve the oxidation stability of regular carbonates, enabling fluorinated solvents to be widely used as main solvents in high-voltage battery systems. This significantly improves the high-voltage resistance of lithium battery electrolytes, thus serving as an important solvent component in high-voltage battery systems. In other words, fluorinated solvents, as important solvent components in high-voltage battery systems, possess good high-voltage stability and is able to ensure the interface stability of the electrolyte at the positive electrode side.

However, at high temperature, the fluorinated solvent may easily lose F atoms, thereby causing F atoms and residual H atoms in the electrolyte to produce highly acidic HF. HF will attack the interface layer between the electrolyte and the active material layers on the positive electrode and negative electrode, leading to interface destruction and continuous side reactions. This ultimately manifests as a series of issues such as battery gas generation at high temperature, high-temperature capacity loss, cycle decay, and direct current resistance (DCR) increase, thus resulting in battery degradation during the cycling process.

The inventors of the present disclosure have discovered that when using fully fluorinated solvents (i.e., all solvents are fluorinated solvents) as the solvent in the electrolyte, while combining the use of high-pressure resistant PST and DTYP as the additives, when applying this electrolyte to lithium-ion batteries, PST and DTYP may participate well in forming a solid-liquid interface film that is stable at high temperature, thereby greatly improving the stability of the electrolyte during high-temperature cycling. Additionally, it is possible to further reduce the direct current resistance of the battery, improve the high-temperature cycling stability and high-temperature storage capacity retention rate of the battery.

The present disclosure provides an electrolyte, which includes: a solvent, wherein the solvent is a fluorinated solvent; a lithium salt; and additives, wherein the additives include 1-propene 1,3-sultone (PST), and diethyl (thiophen-2-ylmethyl)phosphonate (DTYP).

Wherein, the structural formula of DTYP is as follows:

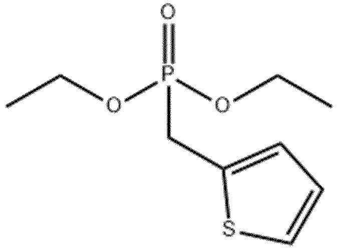

In the electrolyte in the embodiment of the present disclosure, the solvent is a fluorinated solvent, or in other words, the solvent in the electrolyte is a fully fluorinated solvent. The fluorinated solvent possesses relatively good high-pressure stability, which may ensure the interface stability of the electrolyte at the positive electrode side.

In the electrolyte in the embodiment of the present disclosure, the additives include PST and DTYP. The PST and DTYP additives may participate well in forming a stable solid-liquid interface film, greatly improving the stability of the electrolyte in high-temperature cycling. For example, after forming the solid-liquid interface film, the electrolyte may possess specific reduction stability on the negative electrode side of the battery. Specifically, the thiophene part in the molecular structure of the DTYP may preferentially undergo oxidation on the positive electrode side of the battery, thereby forming a stable CEI to protect the electrolyte on the positive electrode side from further oxidative side reactions. The phosphonic acid ester structure in the molecular structure of the DTYP may capture free PF5 ions in the electrolyte, thus inhibiting the increase in acidity of the electrolyte, which may reduce problems such as gas generation and DCR growth at high temperatures in the battery. The PST additive is a sulfonic acid ester containing unsaturated hydrocarbons, and the PST additive participates in the film-forming reaction mainly to produce S-containing SEI.

The embodiment of the present disclosure may improve the high-voltage stability of the electrolyte while ensuring a specific negative electrode reduction stability. The solvent of the electrolyte in the embodiment of the present disclosure is a fluorinated solvent. When the fluorinated solvent is combined with the PST and DTYP, a stable protective film may be formed at the interface between electrode and electrolyte to ensure the stability of the interface between electrode and electrolyte at high temperature, thereby significantly improving the high-temperature stability of high-voltage batteries.

In some embodiments, the fluorinated solvent is a fluorinated carbonate ester solvent. The fluorinated carbonate ester solvent possesses good high-pressure stability, which may ensure the interface stability of the electrolyte on the positive electrode side. In some embodiments, the fluorinated carbonate ester solvent includes fluorinated ethyl methyl carbonate (FEMC) and fluorinated ethylene carbonate (FEC).

The structural formula of FEMC is as follows:

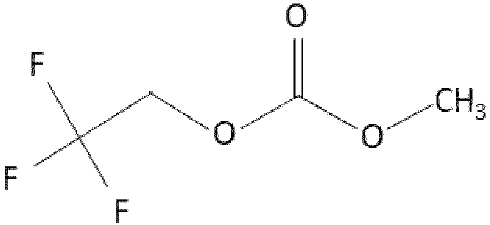

Further, in another embodiment, the mass ratio of FEMC to FEC is 7:3 to 10:0. In other embodiments, FEC may be substituted with other fluorinated carbonates. In a further embodiment, the mass ratio of FEMC to FEC is 7:3. When the proportion of FEMC in the solvent further increases and the proportion of FEC decreases, the probability of FEMC decomposing at the interface between the electrode and the electrolyte increases, producing a large amount of by-products unstable at high temperature. Therefore, the optimal solvent ratio is a mass ratio of 7:3 for FEMC to FEC.

In some embodiments, the mass of DTYP is 0.01% to 1% of the total mass of the electrolyte, and the mass of PST is 0.01% to 1% of the total mass of the electrolyte. Given that the PST additive in the combined additives is a sulfonic acid ester containing unsaturated hydrocarbons, if the PST additive is used alone, it is likely to cause a high concentration of sulfonic acid ester groups after polymerization of the PST. Due to the high structural correlation between carbonate esters and sulfonic acid esters, the polymer structure of the PST may be easily swollen by carbonate esters, and the electrolyte enters the polymer of the PST, which will cause the SEI volume to expand, exposing new interfaces that further react with the electrolyte, resulting in insufficient protection for the negative electrode interface. The DTYP additive in the combined additives forms a film preferentially on the positive electrode side, with weaker film formation on the negative electrode side and SEI components mainly composed of oligomers that are not resistant to high temperature, and cannot be compensated by increasing the amount of DTYP additive alone. Therefore, the present disclosure combines the excellent negative electrode film-forming additive and the excellent positive electrode film-forming additive, that is, the combination of PST additive and DTYP additive. In addition, the present disclosure may ensure the formation of copolymers by the two additives through appropriate ratio adjustment of DTYP additive and PST additive, to form a stable protective film, reducing the concentration ratio of PST and PST polymerization monomers in the polymer, thereby reducing its swelling ability and optimizing the kinetic performance of the system.

In a preferred embodiment, when the mass of DTYP is 0.3% of the total mass of the electrolyte, and the mass of PST is 0.5% of the total mass of the electrolyte, the ratio is the most suitable ratio, because if the PST additive or DTYP additive is used in excess, the protective film formed at the interface in the future will be too thick, which is likely to hinder the transmission speed of lithium-ions at the solid-liquid interface, manifesting as a decrease in battery kinetics, thereby affecting the high-temperature cycling capacity performance. In some embodiments, the additive may also include regular negative electrode film-forming electrolyte additives, such as vinylene carbonate additive (VC).

In some embodiments, the content of the lithium salt is 12% to 20% of the total mass of the electrolyte. In a further embodiment, the lithium salt is one or more of inorganic lithium salts and organic lithium salts. In a further embodiment, the lithium salt may be one or more of lithium hexafluorophosphate (LiPF₆), lithium bis(fluorosulfonyl)imide (LiFSI), lithium bis(trifluoromethanesulfonyl)imide (LiTFSI), lithium tetrafluoroborate (LiBF₄), lithium methanesulfonate (LiCH₃SO₃), lithium trifluoromethanesulfonate (LiCF₃SO₃), lithium hexafluoroarsenate (LiAsF₆), lithium hexafluoroantimonate (LiSbF₆), lithium perchlorate (LiClO₄), Li[BF₂(C₂O₄)], Li[PF₂(C₂O₄)₂], Li[N(CF₃SO₂)₂], Li[C(CF₃SO₂)₃], lithium difluoro(oxalato)borate (LiODFB), lithium bis(oxalato)borate (LiBOB), and lithium difluorophosphate (LiPO₂F₂).

In some embodiments, the lithium salt may include LiPF₆ and lithium bis(fluorosulfonyl)imide (LiFSI), wherein LiPF₆ serves as the main lithium salt and LiFSI serves as the secondary lithium salt, with the main lithium salt accounting for 8 to 20% of the total mass percentage of the electrolyte.

The present disclosure further provides a lithium-ion battery, which includes: a positive electrode, a negative electrode, a separator located between the positive electrode and the negative electrode, and the electrolyte in the above-mentioned embodiment. In some embodiments, the positive electrode includes a positive electrode current collector and a positive electrode material layer located on the positive electrode current collector. The positive electrode material layer includes lithium nickel manganese oxide, with the chemical formula of LiₐNiₓMn_{y}O_{4-z}M_{z}, where 0.90≤a≤1.10, 0.4≤x≤0.6, 1.4≤y≤1.6, 0≤z≤0.1, and element M is one or more of Cl, Br, I, S, Se, Te or F. In some embodiments, the negative electrode includes a negative electrode current collector and a negative electrode material layer located on the negative electrode current collector. The negative electrode material layer includes graphite material. The lithium-ion battery of the present disclosure, due to the use of an electrolyte combining fluorinated solvent with PST additive and DTYP additive, forms a protective film at the interface between electrode (including positive electrode and negative electrode) and electrolyte in the lithium-ion battery that remains stable at high temperature, thereby ensuring the stability of the interface between electrode and electrolyte at high temperature, thus significantly improving the high-temperature stability of high-voltage batteries. In an embodiment, the graphite material may be artificial graphite.

### Positive Electrode

The lithium-ion battery provided in the present disclosure includes a positive electrode including a positive electrode current collector and a positive electrode material layer disposed on the positive electrode current collector. The positive electrode material layer includes a positive electrode active substance (hereinafter, sometimes referred to as "positive electrode material capable of absorbing/releasing lithium Li") capable of absorbing and releasing lithium (Li). Examples of the positive electrode active substance capable of absorbing/releasing lithium (Li) may include lithium nickel manganese oxide, lithium cobalt oxide, lithium nickel cobalt manganese oxide, lithium nickel cobalt aluminum oxide, lithium manganese oxide, lithium iron manganese phosphate, lithium vanadium phosphate, lithium vanadium oxide phosphate, lithium iron phosphate, lithium titanate, and lithium-rich manganese-based materials. The positive electrode current collector may adopt, for example, aluminum foil and nickel foil; however, other positive electrode current collectors commonly used in the field may be used. In some embodiments, the positive electrode material layer may also include a positive electrode conductive agent and a positive electrode binder. In some embodiments, the positive electrode conductive agent is one or a mixture of some of conductive carbon black (Super P), acetylene black, nano-metal powder, carbon nanotubes, and graphene. In some embodiments, the positive electrode binder is one or a mixture of some of polyvinylidene fluoride (PVDF), polyvinylidene fluoride-hexafluoropropylene, polytetrafluoroethylene, sodium carboxymethyl cellulose, and styrene-butadiene rubber.

### Electrolyte

The lithium-ion battery electrolyte provided in the present disclosure includes a lithium salt, a solvent, and additives, wherein the solvent is a fluorinated solvent, and the additives include PST and DTYP. Preferably, the mass of DTYP is 0.01% to 1% of the total mass of the electrolyte, and the mass of PST is 0.01% to 1% of the total mass of the electrolyte. Preferably, the additives may also include vinylene carbonate (VC).

The fluorinated solvent may be a regular fluorinated solvent in this field, for example, the fluorinated solvent includes FEMC. Preferably, the fluorinated solvent further includes FEC. Preferably, the mass ratio of FEMC to FEC is 7:3 to 10:0. Preferably, the mass of DTYP is 0.01% to 1% of the total mass of the electrolyte, and the mass of PST is 0.01% to 1% of the total mass of the electrolyte. More preferably, the mass of DTYP is 0.3% of the total mass of the electrolyte, and the mass of PST is 0.5% of the total mass of the electrolyte.

The lithium salt may be a regular lithium salt in the field. The lithium salt may be one or more of lithium hexafluorophosphate (LiPF₆), lithium bis(fluorosulfonyl)imide (LiFSI), lithium bis(trifluoromethanesulfonyl)imide (LiTFSI), lithium tetrafluoroborate (LiBF₄), lithium methanesulfonate (LiCH₃SO₃), lithium trifluoromethanesulfonate (LiCF₃SO₃), lithium hexafluoroarsenate (LiAsF₆), lithium hexafluoroantimonate (LiSbF₆), lithium perchlorate (LiClO₄), Li[BF₂(C₂O₄)], Li[PF₂(C₂O₄)₂], Li[N(CF₃SO₂)₂], Li[C(CF₃SO₂)₃], lithium difluoro(oxalato)borate (LiODFB), lithium bis(oxalato)borate (LiBOB), and lithium difluorophosphate (LiPO₂F₂). Preferably, the lithium salt may include LiPF₆ and lithium bis(fluorosulfonyl)imide (LiFSI), with the mass of the lithium salt being 12% to 20% of the total mass of the electrolyte, and the mass of LiPF₆ being 8% to 20% of the total mass of the electrolyte.

### Negative Electrode

The lithium-ion battery provided in the present disclosure includes a negative electrode including a negative electrode current collector and a negative electrode material layer disposed on the negative electrode current collector. In some embodiments, the negative electrode current collector may be a copper foil. In some embodiments, the negative electrode material layer includes a negative electrode active substance, a negative electrode conductive agent, a negative electrode binder, and a negative electrode thickener.

The negative electrode active substance may include negative electrode materials (hereinafter, sometimes referred to as "negative electrode materials capable of absorbing/releasing lithium Li") capable of absorbing and releasing lithium (Li). Examples of negative electrode materials capable of absorbing/releasing lithium (Li) may include carbon materials, metal compounds, oxides, sulfides, lithium nitrides such as LiN₃, lithium metal, metals that form alloys with lithium, and polymer materials.

The carbon materials may include low-graphitized carbon, easily graphitized carbon, artificial graphite, natural graphite, mesophase carbon microspheres, soft carbon, hard carbon, pyrolytic carbon, coke, glassy carbon, sintered organic polymer compounds, carbon fibers, and activated carbon. Among them, coke may include pitch coke, needle coke, and petroleum coke. Sintered organic polymer compounds refer to materials obtained by calcining polymer materials such as phenolic plastics or furan resins at appropriate temperatures to carbonize them, with some of these materials being divided into low-graphitized carbon or easily graphitized carbon. Examples of polymer materials may include polyacetylene and polypyrrole.

Among these negative electrode materials capable of absorbing/releasing lithium (Li), materials with charging and discharging voltages close to those of lithium metal may be further selected. This is because the lower the charging and discharging voltages of the negative electrode material, the more easily the electrochemical device (for example, a secondary battery) can possess a higher energy density. Specifically, carbon materials may be selected as the negative electrode material because they undergo only small changes in crystal structure during charging and discharging, thus, good cycle characteristics and large charging and discharging capacities may be obtained. Especially, graphite may be selected because graphite may provide a large electrochemical equivalent and high energy density.

In addition, the negative electrode material capable of absorbing/releasing lithium (Li) may include elemental lithium metal, metal elements and semi-metal elements that may form alloys with lithium (Li), alloys and compounds containing such elements, and so on. In particular, the above-mentioned materials are used together with carbon materials, because in this case, good cycle characteristics as well as high energy density may be obtained. In addition to alloys including two or more metal elements, the alloys used here also include alloys containing one or more metal elements and one or more semi-metal elements. The alloy may be in the following states: solid solution, eutectic crystal (eutectic mixture), intermetallic compound and their mixtures.

Examples of metal elements and semi-metal elements may include tin (Sn), lead (Pb), aluminum (Al), indium (In), silicon (Si), zinc (Zn), antimony (Sb), bismuth (Bi), cadmium (Cd), magnesium (Mg), boron (B), gallium (Ga), germanium (Ge), arsenic (As), silver (Ag), zirconium (Zr), yttrium (Y) and hafnium (Hf). Examples of the aforementioned alloys and compounds may include materials with the chemical formula: MaₛMbₜLiᵤ and materials with the chemical formula: MaₚMc_{q}Mdᵣ. In these chemical formulas, Ma represents at least one element from metal elements and semi-metal elements capable of forming alloys with lithium; Mb represents at least one element from metal elements and semi-metal elements other than lithium and Ma; Mc represents at least one element from non-metal elements; Md represents at least one element from metal elements and semi-metal elements other than Ma; and s, t, u, p, q and r satisfy s>0, t≥0, u≥0, p>0, q>0 and r≥0.

In addition, inorganic compounds that do not include lithium (Li) may be used in the negative electrode, such as MnO₂, V₂O₅, V₆O₁₃, NiS and MoS.

In some embodiments, the negative electrode conductive agent may be one or a mixture of some of Super P, acetylene black, nano silver powder, carbon nanotubes, and graphene. In some embodiments, the negative electrode binder may be one or a mixture of some of polyvinylidene fluoride, polyvinylidene fluoride-hexafluoropropylene, polytetrafluoroethylene, and styrene-butadiene rubber (SBR). In some embodiments, the negative electrode thickener may be one or some of polyvinylpyrrolidone (PVP), sodium carboxymethyl cellulose (CMC-Na), and polyvinyl alcohol (PVA).

### Separator

The lithium-ion battery provided in the present disclosure includes a separator located between the positive electrode and negative electrode. For example, the separator includes a base layer and a surface treatment layer. The base layer is a non-woven fabric, film or composite film with a porous structure, and the material of the base layer is selected from at least one of polyethylene, polypropylene, polyethylene terephthalate, and polyimide. Specifically, polypropylene porous film, polyethylene porous film, polypropylene non-woven fabric, polyethylene non-woven fabric, or polypropylene-polyethylene-polypropylene porous composite film may be adopted. A surface treatment layer is disposed on at least one surface of the base layer, and the surface treatment layer may be a polymer layer or an inorganic layer, or a layer formed by mixing polymer and inorganic material.

### Lithium-Ion Battery

The lithium-ion battery may be assembled using methods commonly used in this field to combine the above-described positive electrode, negative electrode, electrolyte and separator, wherein the positive electrode, separator, negative electrode, etc. are wound or stacked in sequence to form a bare cell, which is then packaged in, for example, an aluminum plastic film, injected with electrolyte, and subjected to formation, sealing and testing. The assembled lithium-ion battery may then be tested for electrochemical performance and cycle performance.

The lithium-ion battery in the present disclosure may be a primary lithium battery or a secondary lithium battery. The preparation method for the secondary lithium battery is described below. It is not difficult to understand that the preparation method described below is only an example, and other methods commonly used in this field may be adopted without departing from the content disclosed in the present disclosure.

### Preparation of Positive Electrode

The positive electrode active substance, positive electrode conductive agent, positive electrode binder, and solvent N-methyl pyrrolidone (NMP) are mixed according to a specific mass ratio under the action of a vacuum mixer until the system appears uniform and transparent to obtain a positive electrode slurry. The mass ratio of each ingredient, namely the positive electrode active substance, positive electrode conductive agent, and positive electrode binder is: positive electrode active material: 93% to 98.5%, positive electrode conductive agent: 0.5% to 3%, positive electrode binder: 0.5% to 4%; and NMP is added according to the percentage of positive electrode material in the total mass of the positive electrode slurry at 45% to 70%. The positive electrode slurry is then uniformly coated on the positive electrode current collector, and through processes such as drying, rolling, and cutting, the positive electrode may be obtained.

### Preparation of Negative Electrode

After mixing the various ingredients of the negative electrode material, deionized water is added and thoroughly mixed in a vacuum mixer to prepare a uniform negative electrode slurry. The mass ratio of each ingredient in the negative electrode material is: negative electrode active substance: 94% to 98%, negative electrode conductive agent: 0.2% to 1.5%, negative electrode thickener: 0.01% to 1.5%, and negative electrode binder: 1% to 3%; and deionized water is added according to the percentage of 45% to 70% of the negative electrode material in the total mass of the negative electrode slurry.

Then, the negative electrode slurry is uniformly coated on the negative electrode current collector, and subjected to processes such as drying, rolling, and cutting, the negative electrode may be obtained.

### Preparation of Electrolyte

In an argon atmosphere glove box with a water content of <10ppm, battery-grade FEMC and FEC are mixed to form a solvent. Subsequently, lithium salt and appropriate additives are added to the solvent and mixed uniformly to obtain the electrolyte. Therein, lithium salt and PST, as well as DTYP may be added as required.

### Preparation of Separator

The separator includes a base layer and a surface treatment layer; the base layer is a non-woven fabric, film, or composite film with a porous structure, and the material of the base material layer is selected from at least one of polyethylene, polypropylene, polyethylene terephthalate, and polyimide. Specifically, polypropylene porous film, polyethylene porous film, polypropylene non-woven fabric, polyethylene non-woven fabric, or polypropylene-polyethylene-polypropylene porous composite film may be adopted. The surface treatment layer is disposed on at least one surface of the base layer, and the surface treatment layer may be a polymer layer or an inorganic layer, or may be a layer formed by mixing polymer and inorganic material.

### Preparation of Lithium-Ion Battery

The lithium-ion battery may be assembled using methods commonly used in this field to combine the above-described positive electrode, negative electrode, electrolyte and separator, wherein the positive electrode, separator, negative electrode, etc. are wound or stacked in sequence to form a bare cell, which is then packaged in, for example, an aluminum plastic film, injected with electrolyte, and subjected to formation, sealing and testing. The assembled lithium-ion battery may then be tested for electrochemical performance and cycle performance.

The following lists some specific embodiment and comparative examples to better illustrate the present disclosure.

### Example 1

### (1)Preparation of positive electrode

The example of the present disclosure uses lithium nickel manganese oxide as the positive electrode active substance. Lithium nickel manganese oxide is obtained by mixing two ingredients and conducting secondary sintering treatment; wherein, the chemical formula of the first ingredient is LiₐNiₓMn_{y}O_{4-z}M_{z}, where 0.90≤a≤1.10, 0.4≤x≤0.6, 1.4≤y≤1.6, 0≤z≤0.1, element M is one or more of Cl, Br, I, S, Se, Te or F. In this example, a=1, x=0.4, y=1.6, z=0; then the carbon source is pre-sintered under nitrogen atmosphere to obtain the second ingredient. The carbon source may be one or more of fructose, polyethylene glycol, galactose, polyvinylpyrrolidone or tannic acid; in this example, fructose is selected as the carbon source; the second ingredient is coated on at least part of the surface of the first ingredient. The composition of the second ingredient includes carbon, and the mass of the second ingredient is 1.0wt% to 3.0wt% of the mass of the first ingredient. In this example, the mass of the second ingredient is 2.0wt% of the mass of the first ingredient.

The aforementioned prepared positive electrode active material, polyvinylidene fluoride (PVDF) serving as a binder, and conductive carbon black (Super P) serving as a conductive agent are mixed according to a weight ratio of 98:1:1, added with N-methyl pyrrolidone (NMP), and stirred under the action of a vacuum stirrer until the system becomes uniformly transparent to obtain a positive electrode slurry. The positive electrode slurry is uniformly coated on aluminum foil. The aluminum foil is air-dried at room temperature and then transferred to an oven for drying, followed by cold pressing and cutting to obtain the positive electrode.

### (2) Preparation of negative electrode

Artificial graphite is used as the negative electrode active material, conductive carbon black (super P) is used as the conductive agent, sodium carboxymethyl cellulose (CMC-Na) is used as the thickener, and styrene-butadiene rubber (SBR) is used as the binder. These materials are mixed according to a mass ratio of 96:1:1:2, and deionized water is added therein. The negative electrode slurry is obtained under the action of a vacuum mixer. The negative electrode slurry is uniformly coated on a copper foil serving as the negative electrode current collector. The copper foil is air-dried at room temperature and then transferred to an oven for drying. The negative electrode may then be obtained through cold pressing and cutting.

### (3) Preparation of electrolyte

In an argon atmosphere glove box with a water content of <10 ppm, battery-grade FEMC and FEC are mixed in a ratio of 7:3 to form a solvent. Then, lithium salt and additives are added and mixed uniformly to obtain an electrolyte. The lithium salt is LiPF₆, and the mass of the lithium salt accounts for 13% of the total mass of the electrolyte. The additives are PST and DTYP. The mass of DTYP is 0.3% of the total mass of the electrolyte, and the mass of PST is 0.01% of the total mass of the electrolyte.

### (4) Preparation of separator

A polypropylene (PP) film with a thickness of 12µm serves as the separator.

### (5) Preparation of lithium-ion battery

The positive electrode, separator, and negative electrode prepared above are stacked in sequence, with the separator located between the positive and negative electrodes to serve as an isolating layer. Then, the stack is wrapped in aluminum-plastic film and transferred to a vacuum oven for drying at 120°C. After injecting 3.0 g/Ah of the electrolyte prepared above, the package is sealed and the electrolyte formation process conducted, ultimately preparing a 1 Ah pouch battery (i.e., a lithium-ion battery).

### Example 2

Consistent with the preparation method of Example 1, the difference lies in that in Example 2, the mass of DTYP is 0.3% of the total mass of the electrolyte, and the mass of PST is 0.5% of the total mass of the electrolyte.

### Example 3

Consistent with the preparation method of Example 1, the difference lies in that in Example 3, the mass of DTYP is 0.3% of the total mass of the electrolyte, and the mass of PST is 1% of the total mass of the electrolyte.

### Example 4

Consistent with the preparation method of Example 2, the difference lies in that in Example 4, the mass ratio of FEMC to FEC is 6:4.

### Example 5

Consistent with the preparation method of Example 2, the difference lies in that in Example 5, the mass ratio of FEMC to FEC is 8:2.

### Example 6

Consistent with the preparation method of Example 2, the difference lies in that in Example 6, the mass ratio of FEMC to FEC is 9:1.

### Example 7

Consistent with the preparation method of Example 2, the difference lies in that in Example 7, the mass ratio of FEMC to FEC is 10:0.

### Comparative Example 1

Consistent with the preparation method of Example 1, the difference is that the electrolyte in Comparative Example 1 lacks PST, while the additive is DTYP, and the mass of DTYP is 0.01% of the total mass of the electrolyte.

### Comparative Example 2

Consistent with the preparation method of Example 1, the difference is that the electrolyte in Comparative Example 2 lacks PST, while the additive is DTYP, and the mass of DTYP is 0.3% of the total mass of the electrolyte.

### Comparative Example 3

Consistent with the preparation method of Example 1, the difference is that the electrolyte in Comparative Example 3 lacks PST, while the additive is DTYP, and the mass of DTYP is 1% of the total mass of the electrolyte.

### Comparative Example 4

Consistent with the preparation method of Example 1, the difference is that the electrolyte in Comparative Example 4 lacks DTYP, while the additive is PST, and the mass of PST is 0.01% of the total mass of the electrolyte.

### Comparative Example 5

Consistent with the preparation method of Example 1, the difference is that the electrolyte in Comparative Example 5 lacks DTYP, while the additive is PST, and the mass of PST is 0.3% of the total mass of the electrolyte.

### Comparative Example 6

Consistent with the preparation method of Example 1, the difference is that the electrolyte in Comparative Example 6 lacks DTYP, while the additive is PST, and the mass of PST is 1% of the total mass of the electrolyte.

### Comparative Example 7

Consistent with the preparation method of Example 1, the difference is that the electrolyte in Comparative Example 7 lacks DTYP.

### Comparative Example 8

Consistent with the preparation method of Example 1, the difference is that the electrolyte in Comparative Example 8 lacks DTYP, while the additive is vinylene carbonate (VC), and the mass of VC is 0.5% of the total mass of the electrolyte.

### Comparative Example 9

Consistent with the preparation method of Example 1, the difference is that the electrolyte in Comparative Example 9 lacks DTYP, while the additive is VC and ethylene sulfate (DTD), and the mass of VC is 0.5% of the total mass of the electrolyte, and the mass of DTD is 0.5% of the total mass of the electrolyte.

The lithium-ion battery of the present disclosure may be tested by the following method:
(1) Direct current resistance (DCR) test for lithium-ion battery under 25°C
   At a specified temperature, when the battery is discharged to 50% SOC (State of Charge, reflecting the remaining capacity of the battery) at 1 C current, the current is increased to 4 C and maintained for 30 s. The difference between the updated stable voltage and the original platform voltage is detected. The ratio of this value to the 4 C current value is the direct current resistance (DCR) of the battery. The DCR test result conducted after the first full charge of the battery is the initial DCR of the battery.
(2) Storage capacity retention ratio of lithium-ion battery at high temperature (60°C)
   After fully charging the lithium-ion battery, the lithium-ion battery is stored in a constant temperature chamber at 60°C for 15 days. After sufficient cooling, the lithium-ion battery is discharged at 1 C rate to the cut-off voltage. Comparison is made between the capacity percentage and the initial discharge capacity.
(3) Cycle test at high temperature of 45°C

The battery is subjected to charge-discharge cycling at 45°C, with a charge-discharge cut-off voltage range of 3.4V to 4.85V and a charge-discharge rate of 0.5C/1C. The discharge capacity for each cycle is recorded. The test is terminated when the battery capacity remains at 80% SOC (State of Charge), and the actual number of cycles achieved is recorded. For lithium nickel manganese oxide/graphite batteries, the charge-discharge cut-off voltage is 3.4 to 4.85V.

**Table 1. Electrolyte Composition Table for Different Groups of Examples and Comparative Examples**

| Group | FEMC | FEC | LiPF₆ | Additive |
|---|---|---|---|---|
| Example 1 | 7 | 3 | 13 | 0.3% DTYP +0.01%PST |
| Example 2 | 7 | 3 | 13 | 0.3% DTYP +0.5%PST |
| Example 3 | 7 | 3 | 13 | 0.3% DTYP +1%PST |
| Example 4 | 6 | 4 | 13 | 0.3% DTYP +0.5%PST |
| Example 5 | 8 | 2 | 13 | 0.3% DTYP +0.5%PST |
| Example 6 | 9 | 1 | 13 | 0.3% DTYP +0.5%PST |
| Example 7 | 10 | 0 | 13 | 0.3% DTYP +0.5%PST |
| Comparative Example 1 | 7 | 3 | 13 | 0.01%DTYP |
| Comparative Example 2 | 7 | 3 | 13 | 0.3% DTYP |
| Comparative Example 3 | 7 | 3 | 13 | 1% DTYP |
| Comparative Example 4 | 7 | 3 | 13 | 0.01%PST |
| Comparative Example 5 | 7 | 3 | 13 | 0.5%PST |
| Comparative Example 6 | 7 | 3 | 13 | 1%PST |
| Comparative Example 7 | 7 | 3 | 13 | None |
| Comparative Example 8 | 7 | 3 | 13 | 0.5%VC |
| Comparative Example 9 | 7 | 3 | 13 | 0.5%VC+0.5%DTD |

**Table 2. Performance Test Results of Different Groups of Examples and Comparative Examples**

| Group | DCR (mΩ) at 25°C | Storage capacity retention rate (%) at 60°C | Number of cycles (80% SOH) at high temperature of 45°C |
|---|---|---|---|
| Example 1 | 107 | 88 | 370 |
| Example 2 | 65 | 99 | 489 |
| Example 3 | 95 | 93 | 379 |
| Example 4 | 76 | 79 | 386 |
| Example 5 | 114 | 81 | 324 |
| Example 6 | 137 | 71 | 312 |
| Example 7 | 183 | 71 | 297 |
| Comparative Example 1 | 114 | 82 | 324 |
| Comparative Example 2 | 110 | 83 | 354 |
| Comparative Example 3 | 110 | 86 | 350 |
| Comparative Example 4 | 105 | 63 | 269 |
| Comparative Example 5 | 126 | 73 | 285 |
| Comparative Example 6 | 167 | 83 | 215 |
| Comparative Example 7 | 199 | 60 | 271 |
| Comparative Example 8 | 189 | 67 | 277 |
| Comparative Example 9 | 188 | 69 | 293 |

By analyzing the above data, the following conclusions may be drawn:
From Comparative Examples 1 to 3, it may be known that when the content of DTYP additive is 0.3% of the total mass of the electrolyte, the comprehensive performance of the battery is optimal. When the content of DTYP increases from 0.01% to 0.3%, the capacity retention rate of the battery under high temperature storage rises, indicating that under high temperature conditions, DTYP additive may better maintain thermodynamic stability and reduce reactions at the solid-liquid interface. However, when the content of DTYP reaches 1%, the high-temperature cycling performance of the battery deteriorates to some extent. Therefore, in the present disclosure, the content of DTYP is limited to 0.01% to 1% of the total mass of the electrolyte, with the optimal ratio being 0.3%. Since DTYP itself is a film-forming additive, it forms a stable protective film at the interface of positive and negative electrodes. In appropriate amounts, DTYP may inhibit side reactions of the electrolyte at the interface. However, if the amount of film-forming additive is excessive, the thickness of the interface protective film becomes too thick, which is likely to hinder the transmission speed of lithium-ions at the solid-liquid interface, manifesting as a decrease in battery kinetics, thus affecting the high-temperature cycling capacity performance. In addition, since DTYP film formation occurs preferentially on the positive electrode side, the film formation on the negative electrode side is weaker and the protective film components are mainly oligomers that are not resistant to high temperatures. This cannot be compensated by increasing the amount of a single additive.

From Comparative Examples 4 to 6, it may be known that when the content of PST additive is 0.5% of the total mass of the electrolyte, the comprehensive performance of the battery is optimal. When the content of PST increases from 0.01% to 0.5%, the capacity retention rate of the battery under high temperature storage increases, indicating that under high temperature conditions, PST additive may better maintain thermodynamic stability and reduce reactions at the solid-liquid interface. However, when the content of PST reaches 1%, the high-temperature cycling performance of the battery deteriorates to some extent. Therefore, in the present disclosure, the content of PST is limited to 0.01% to 1% of the total mass of the electrolyte, with the optimal ratio being 0.5%. This is because PST itself is a film-forming additive that forms a stable protective film at the interface of positive and negative electrodes. In appropriate amounts, PST may inhibit side reactions of the electrolyte at the interface. However, if the amount of film-forming additive is excessive, the thickness of the interface protective film becomes too thick, which is likely to hinder the transmission speed of lithium-ions at the solid-liquid interface, manifesting as a decrease in battery kinetics, thus affecting the high-temperature cycling capacity performance. Additionally, when using PST alone, if the content of PST is too high, it will lead to high concentration of sulfonic acid ester groups after PST polymerization. Due to the significant structural correlation between carbonate esters and sulfonic acid esters, the polymer structure of PST is easily swollen by carbonate esters. The electrolyte enters the polymer of PST, causing the SEI volume to expand, exposing new interfaces for further reaction with the electrolyte, which is insufficient for protecting the interface on the negative electrode side.

From Example 1 to Example 3, it may be known that when the solvent system remains unchanged and the LiPF₆ concentration is 13%wt., the use of PST and DTYP in combination improves the high-temperature storage capacity retention rate and high-temperature cycle number of the corresponding battery to a specific extent. When the amount of DTYP is limited to 0.3%, the amount of PST is limited to 0.01% to 1%, with the optimal usage being 0.5% wt. This is because the DTYP additive used in the present disclosure, with the thiophene part in its molecular structure, may preferentially undergo oxidation on the positive electrode side, thereby forming a stable CEI to protect the electrolyte on the positive electrode side from further oxidative side reactions. The phosphonic acid ester structure in the molecular structure of the DTYP additive may capture free PF5 ions in the electrolyte, thereby inhibiting the increase in acidity of the electrolyte and reducing problems such as gas generation and DCR growth at high temperatures. In the meantime, when used in combination with an excellent negative electrode film-forming additive, that is, another jointly used additive PST also participates in the film-forming reaction in the battery, which helps to further assist in generating a stable interface passivation layer, mainly producing S-containing SEI. Moreover, the combined use of DTYP and PST does not result in an excessively high concentration of sulfonic acid ester groups after PST polymerization, avoiding defects caused by swelling of the PST polymer structure by carbonate esters, and also avoiding defects caused by excessive thickness of the interface protection film due to excessive addition. Through appropriate ratio adjustment of DTYP and PST, the present disclosure may ensure the formation of copolymers at the interface between electrode and electrolyte by the two additives, reducing the concentration ratio of DTYP and PST polymerization monomers in the polymer, thereby achieving a reduction in their swelling ability and optimizing the kinetic performance of the system.

As may be known from Example 2 and Examples 4 to 7, when the additive formulation is at the optimal ratio, adjustments to the solvent may also lead to significant changes in battery performance. When the ratio of FEMC in the solvent is further increased and the ratio of FEC is reduced, the DCR of the battery may increase. However, this is caused by the decomposition of FEMC at the interface, producing a large amount of high-temperature unstable by-products, which ultimately leads to a decline in the high-temperature performance of the battery due to this unstable SEI. Therefore, in the present disclosure, the optimal solvent ratio is specified as FEMC:FEC=7:3.

From Comparative Examples 7 to 9, it may be known that when no additives are used or only one other additive is used alone, the various performance parameters of the battery deteriorate significantly, indicating that DTYP and PST play a very important role in the battery, and when used in combination, they may optimize performance. When regular additives VC and DTD are used in combination, the lithium nickel manganese oxide high-voltage system exhibits extremely high DCR, cycling at room temperature is difficult to be carried out, and capacity cannot be delivered after high-temperature storage. This indicates that DTYP and PST should be used in combination to ensure normal operation of the high-voltage system.

In summary, the present disclosure combines the use of PST additive and DTYP additive in the electrolyte of a fully fluorinated solvent system. After the PST additive and DTYP additive are added to the electrolyte in an optimal ratio, they may participate well in forming a stable solid-liquid interface film at the interface between electrode and electrolyte, ensuring the stability of the interface between electrode and electrolyte at high temperature, greatly improving the stability of the electrolyte in high-temperature cycling, thereby achieving comprehensive improvement in the high-temperature performance of the battery. For example, it is possible to reduce the DCR of battery, improve the high-temperature cycling stability and high-temperature storage capacity retention rate of the battery.

## Claims

1. An electrolyte, comprising:
a solvent, wherein the solvent is a fluorinated solvent;
a lithium salt; and
additives, wherein the additives comprise 1-propene 1,3-sultone, and diethyl (thiophen-2-ylmethyl)phosphonate.

2. The electrolyte according to claim 1, wherein a mass of the diethyl (thiophen-2-ylmethyl)phosphonate is 0.01% to 1% of a total mass of the electrolyte, and a mass of the 1-propene 1,3-sultone is 0.01% to 1% of the total mass of the electrolyte.

3. The electrolyte according to claim 1, wherein the fluorinated solvent is a fluorinated carbonate ester solvent.

4. The electrolyte according to claim 3, wherein the fluorinated carbonate ester solvent comprises fluorinated ethyl methyl carbonate and fluorinated ethylene carbonate, and a mass ratio of the fluorinated ethyl methyl carbonate to the fluorinated ethylene carbonate is 7:3 to 10:0.

5. The electrolyte according to claim 1, wherein a content of the lithium salt is 12% to 20% of a total mass of the electrolyte.

6. The electrolyte according to claim 1, wherein the lithium salt is one or more selected from lithium hexafluorophosphate, lithium bis(fluorosulfonyl)imide, lithium bis(trifluoromethanesulfonyl)imide, lithium tetrafluoroborate, lithium methanesulfonate, lithium trifluoromethanesulfonate, lithium hexafluoroarsenate, lithium hexafluoroantimonate, lithium perchlorate, lithium difluoro(oxalato)borate, lithium bis(oxalato)borate, and lithium difluorophosphate.

7. A lithium-ion battery, comprising: a positive electrode, a negative electrode, a separator located between the positive electrode and the negative electrode, and the electrolyte according to any one of claims 1 to 6.

8. The lithium-ion battery according to claim 7, wherein the positive electrode comprises a positive electrode current collector and a positive electrode material layer located on the positive electrode current collector, the positive electrode material layer comprises lithium nickel manganese oxide, with a chemical formula of LiaNiₓMn_{y}O_{4-z}M_{z}, where 0.90≤a≤1.10, 0.4≤x≤0.6, 1.4≤y≤1.6, 0≤z≤0.1, and element M is one or more of Cl, Br, I, S, Se, Te or F.

9. The lithium-ion battery according to claim 8, wherein the negative electrode comprises a negative electrode current collector and a negative electrode material layer located on the negative electrode current collector, with the negative electrode material layer comprising a graphite material.
